# EUROPEAN PATENT APPLICATION

(11) **EP 4 675 830 A1**
(43) Date of publication of application: **07.01.2026**
(21) Application number: 24775175.3
(22) Date of filing: 19.03.2024
(51) Int. Cl.: H01M 50/516, H01M 50/519, H01M 50/502, H01M 50/204, B23K 26/21, B23K 20/12

(54) **BATTERY MODULE**

(30) Priority: 20.03.2023 KR 20230035879
(71) Applicant: LG Energy Solution, Ltd., Seoul 07335 (KR)
(72) Inventor: UHM, Jae Yong, Daejeon 34122 (KR); CHO, Heewon, Daejeon 34122 (KR)
(74) Representative: Hoffmann Eitle
(86) International application number: PCT/KR2024/003452
(87) International publication number: WO 2024/196127

(57) **Abstract**

A battery module is disclosed. The battery module of the present invention includes: a plurality of inner bus bars disposed in the bus bar frame and connected to a first electrode lead and a second electrode lead; a first terminal bus bar disposed in the bus bar frame and connected to the first electrode lead; a second terminal bus bar disposed in the bus bar frame and connected to the second electrode lead having an polarity opposite to the first terminal bus bar; a circuit board provided with a plurality of circuit joints; a joint member bonded to the second terminal bus bar; and a wire soldered to the first electrode lead and the circuit joint, or soldered to the joint member and the circuit joint.

## Description

### [TECHNICAL FIELD]

This application claims the benefit of priority based on Korean Patent Application No. 10-2023-0035879 filed on March 20, 2023, entire content disclosed in the document of the patent applications is included as a part of this specification.

The present invention relates to a battery module suitable for automated manufacturing process, allowing inspecting a bonding defect along with a bonding process and soldering rework with reduced number of bonding parts and simplified bonding process.

### [BACKGROUND ART]

Generally, secondary batteries include an anode, a cathode and an electrolyte, and generate electrical energy using a chemical reaction. The use of secondary batteries is gradually increasing due to their advantage of the ability of charge and discharge. Among these secondary batteries, secondary lithium batteries have a high energy density per unit weight, and are widely used as power sources for electronic communication devices or as driving sources for high-power hybrid vehicles, electric vehicles, etc.

In terms of the shape of these secondary batteries, demand is increasing for prismatic secondary batteries and pouch-type secondary batteries that may be applied to products such as mobile phones due to their thin thickness. In terms of materials of secondary batteries, demand is increasing for lithium secondary batteries such as lithium-ion batteries and lithium-ion polymer batteries with high energy density, discharge voltage and output stability.

The types of secondary batteries widely used today include lithium ion batteries, lithium polymer batteries, nickel cadmium batteries, nickel hydrogen batteries and nickel zinc batteries. The operating voltage of these battery cells is approximately 2.5V to 4.2V. When a higher output voltage is required, a battery module is constituted by connecting multiple battery cells in series, and a battery pack is constituted by connecting multiple battery modules. In addition, a battery pack is constituted by connecting multiple battery cells in parallel according to the charge and discharge capacity required for the battery pack. Accordingly, the number of battery cells and the electrical connection structure of the battery pack may be selected in various ways according to the required output voltage or charge and discharge capacity.

The battery module includes an interconnect board (ICB: Inter-Connect Board). The interconnect board connects battery cells in series in the high voltage battery module.

The interconnect board includes a flexible circuit board. A plurality of sensing plates are connected to a plurality of bus bars on the flexible circuit board, respectively, and a plurality of battery cells are connected to the plurality of bus bars, respectively. Here, a plurality of sensing plates are first welded to the flexible circuit board, a plurality of sensing plates are welded to the bus bar, and the electrode leads of the battery cells are welded to the bus bar. Such interconnect board provides a series connection structure that enables voltage measurement of the battery cell.

In the battery module, the flexible circuit board and the sensing plate are welded by laser, and the sensing plate and the bus bar are welded by laser. During the laser welding, there must be no gap between the two metal members to secure welding strength. Because the flexible circuit board is flexible, it is difficult for a clamping device to fix the positions of the flexible circuit board and the sensing plate. Accordingly, automation of the clamping operation was difficult such that an operator has to perform the clamping operation manually.

In addition, during the laser welding of the sensing plate to the bus bar, the area of the sensing plate is significantly narrower than the welding bead. Accordingly, when there is a welding defect, the unwelded portion of the sensing plate became too narrow, making it difficult to re-weld the sensing plate to the bus bar.

In addition, even when the area of the sensing plate is increased, the sensing plate is chemically or thermally deformed by the high temperature during laser welding, making it more difficult to re-weld the sensing plate and bus bar.

In addition, since a laser is used in the laser welding to heat and melt the metal parts and join the same, the strength evaluation of the laser welded portion can only be performed through a destructive test that cuts and inspects the laser welded portion. Accordingly, it is difficult to perform the strength evaluation of the welded portion comprehensively. In addition, the time required for the strength evaluation of the welded portion increases.

In addition, the sensing plate is connected to the flexible circuit board in order to connect the flexible circuit board to the bus bar. Accordingly, the material cost increases as much as the sensing plate is connected, and the bonding time of the flexible circuit board and the bus bar may additionally increase as much as the time for welding the sensing plate to the flexible circuit board. Furthermore, the assembly time and cost of the battery module may increase.

The background art of the present invention is disclosed in Korean Patent Application Publication No. 2019-0027096 (published on March 14, 2019, titled Battery Cell Module with Protective Structure of FPCB).

### [DETAILED DESCRIPTION OF THE INVENTION]

### [TECHNICAL PROBLEM]

In order to solve above-described problems, it is an object of the present invention to provide a battery module that does not require welding the sensing plate to the circuit board.

It is an object of the present invention to provide a battery module that allows reduction of the assembly work of the battery module and the assembly time.

It is an object of the present invention to provide a battery module suitable for automated soldering of the circuit board and the wire by omitting the clamping process.

It is an object of the present invention to provide a battery module that allows re-soldering of a wire to an unsoldered portion of a joint member in the event of a soldering defect.

It is an object of the present invention to provide a battery module that allows a bonding strength test of a wire during a soldering process of the wire and re-soldering the wire.

It is an object of the present invention to provide a battery module with sufficient soldering strength during the soldering of a wire to an electrode lead and a circuit board.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The present invention may be applied to a battery module including: a bus bar frame; and an inner bus bar, a first terminal bus bar and a second terminal bus bar disposed in the bus bar frame.

A plurality of inner bus bars may be provided.

Electrode leads of two different battery cells may be connected to the inner bus bar, respectively.

The electrode leads of the two different battery cells may be the first electrode lead and the second electrode lead having opposite polarities.

The electrode leads of the two different battery cells may have the same polarity.

At least one of the first electrode lead and the second electrode lead having opposite polarities may be connected to the inner bus bar.

The first electrode lead may be connected to the first terminal bus bar.

The second electrode lead may be connected to the second terminal bus bar.

The first electrode lead and the second electrode lead may include materials of different types.

The first electrode lead and the inner bus bar may include materials of different types.

The first electrode lead and the first terminal bus bar may include materials of different types.

The second electrode lead and the inner bus bar may include a material of the same type.

The second electrode lead and the second terminal bus bar may include a material of the same type.

In order to solve the above-described problem, the present invention provides a circuit board provided with a circuit joint; a joint member bonded to the second terminal bus bar; and a wire having a first side soldered to the circuit joint and a second side soldered to the first electrode or the joint member.

The circuit board may be disposed in the bus bar frame.

The wire may include a material of the same type as the first electrode lead.

The circuit joint may include a material of the same type as the wire.

The joint member may include a material of the same type as the wire.

The first electrode lead may include aluminum.

The wire may include aluminum.

The circuit joint may include aluminum.

The joint member may include aluminum.

The wire and the joint member may include aluminum.

The wire and joint member may be bonded by melting solder paste.

The first electrode lead may be welded by laser to the first region of the inner bus bar.

The second electrode lead may be welded by laser to the second region of the inner bus bar.

The first region and the second region may be non-overlapping regions.

The first electrode lead and the second electrode lead may be welded by laser.

The first region and the second region may be overlapping regions.

The inner bus bar may be disposed between the first terminal bus bar and the second terminal bus bar.

The first terminal bus bar and the second terminal bus bar may be arranged outside a plurality of inner bus bars.

Optionally, the joint member may be stacked on and bonded to the second terminal bus bar.

The bonding may be achieved by welding.

The joint member may have a plate shape.

The welding may be performed by laser.

Optionally, the second terminal bus bar may include: a body; and an extension extending laterally from the body, and the joint member may be bonded to the extension.

The bonding may be performed by welding.

The joint member may have a plate shape.

The welding may be performed by laser.

The extension may include a material of the same type as the body.

Optionally, the joint member may be bonded to a side surface of the second terminal bus bar.

The bonding may be performed by welding.

The welding may be performed by friction stirring.

The wire may include a wire body having a first side and a second side bent toward the circuit joint and the inner bus bar, respectively.

A first wire joint soldered to the circuit joint may be provided at the first side of the wire body.

A second wire joint soldered to the first electrode lead or the joint member may be provided at the second side of the wire body.

The first wire joint and the second wire joint may be curved.

The first wire joint and the second wire joint may be round.

The first wire joint may be convex toward the circuit joint.

An end of the first wire joint may be bent away from the circuit joint.

The second wire joint may be convex toward the first electrode lead or the joint member.

An end of the second wire joint may be bent away from the first electrode lead or the joint member.

After the soldering process of the first wire joint and/or the second wire joint, the soldering strength may be evaluated.

The strength evaluation may be performed by clamping and tensioning the end of the first wire joint and/or the end of the second wire joint.

The clamping and tensioning may be performed after the soldering process.

The strength evaluation may be performed by the clamping and tensioning equipment installed in the production line.

### [ADVANTAGEOUS EFFECTS]

According to the present invention, since the wire is soldered to the circuit board, the first electrode lead and the joint member, it is not necessary to weld a sensing plate to the circuit board. Accordingly, the welding process for connecting the sensing plate to the circuit board may be omitted.

According to the present invention, since the sensing plate may be omitted from the circuit board, the number of parts of the battery module may be reduced, and the assembly time and assembly man-hours of the battery module may be reduced.

According to the present invention, since the sensing plate may be omitted from the circuit board, the clamping process is not necessary to fix the positions of the flexible circuit board and the sensing plate.

According to the present invention, since the clamping operation may be omitted, the process of soldering the circuit board and the wire may be automated.

According to the present invention, a wire having a small diameter is soldered to a joint member having a large area. Accordingly, when a soldering defect occurs when the wire is soldered to the circuit board and the joint member, the wire may be re-soldered to the unsoldered portion of the joint member.

According to the present invention, since the wire is soldered at a significantly lower temperature than laser welding, the first electrode lead, the circuit board and the joint member hardly undergo chemical or thermal deformation. Accordingly, when a soldering defect occurs in the wire, the wire may be re-soldered to the first electrode lead, the circuit joint of the circuit board and the joint member.

According to the present invention, after the wire is soldered, the tension clamp may pull the wire to test the bonding strength of the soldered portion. Accordingly, the bonding strength of the soldered portion may be evaluated through non-destructive testing.

According to the present invention, since the bonding strength evaluation of the soldered portion may be performed together with the soldering process of the wire, the time required for the strength evaluation of the soldered portion may be significantly reduced. In addition, when a soldering defect of the wire occurs, the wire may be quickly re-soldered. In addition, the strength of the soldered portion may be evaluated in real time, and the strength of the soldered portion may be inspected in full.

According to the present invention, since the joint member is connected or bonded to the wire and the second electrode lead of materials of different types, the soldering strength may be sufficiently secured even when the wire is soldered to the second electrode lead and the circuit board.

In addition to the advantageous effects described above, specific effects of the present invention will be described further while describing specific details of the present invention.

### [BRIEF DESCRIPTION OF DRAWINGS]

FIG. 1 is a perspective view schematically illustrating a battery pack according to the present invention.
FIG. 2 is a perspective view schematically illustrating the battery module of FIG. 1.
FIG. 3 is a perspective view schematically illustrating an inner bus bar, a first terminal bus bar, a second terminal bus bar and a wire installed at a front side bus bar frame of the battery module of FIG. 2.
FIG. 4 is an exploded perspective view schematically illustrating the inner bus bar, the first terminal bus bar and the second terminal bus bar installed at the front side bus bar frame of FIG. 3.
FIG. 5 is an enlarged view schematically illustrating a wire soldered to a first electrode lead of the inner bus bar and a circuit board at the front side bus bar frame of FIG. 3.
FIG. 6 is an enlarged view schematically illustrating a wire soldered to a joint member of the second terminal bus bar and the circuit board in the front side bus bar frame of FIG. 3.
FIG. 7 is a side view schematically illustrating a soldering of a wire facilitated despite a height difference of the wire at the front side bus bar frame of FIG. 3.
FIG. 8 is a plan view schematically illustrating the inner bus bar, the first terminal bus bar and the second terminal bus bar installed at the front side bus bar frame of FIG. 3.
FIG. 9 is a plan view schematically illustrating an inner bus bar and a wire installed at a rear side bus bar frame of FIG. 2.
FIG. 10 is a perspective view schematically illustrating an inner bus bar, a first terminal bus bar, a second terminal bus bar and a wire installed at a front side bus bar frame of a battery module according to a second embodiment of the present invention.
FIG. 11 is an exploded perspective view schematically illustrating the inner bus bar, the first terminal bus bar, the second terminal bus bar and the wire installed at the front side bus bar frame of FIG. 10.
FIG. 12 is an enlarged view schematically illustrating a wire soldered to a first electrode lead of the inner bus bar and a circuit board at the front side bus bar frame of FIG. 10.
FIG. 13 is an enlarged view schematically illustrating a wire soldered to a joint member of the second terminal bus bar and the circuit board in the front side bus bar frame of FIG. 10.
FIG. 14 is a plan view schematically illustrating the inner bus bar, the first terminal bus bar and the second terminal bus bar installed at the front side bus bar frame of FIG. 10.
FIG. 15 is a perspective view schematically illustrating an inner bus bar, a first terminal bus bar, a second terminal bus bar and a wire installed at a front side bus bar frame of a battery module according to a third embodiment of the present invention.
FIG. 16 is an exploded perspective view schematically illustrating the inner bus bar, the first terminal bus bar, the second terminal bus bar and the wire installed at the front side bus bar frame of FIG. 15.
FIG. 17 is an enlarged view schematically illustrating a wire soldered to a first electrode lead of the inner bus bar and a circuit board at the front side bus bar frame of FIG. 15.
FIG. 18 is an enlarged view schematically illustrating a wire soldered to a joint member of the second terminal bus bar and the circuit board in the front side bus bar frame of FIG. 15.
FIG. 19 is a perspective view schematically illustrating a structure of the second terminal bus bar and the joint member at the front side bus bar frame of FIG. 15.
FIG. 20 is a plan view schematically illustrating the inner bus bar, the first terminal bus bar and the second terminal bus bar installed at the front side bus bar frame of FIG. 15.
FIG. 21 is a perspective view schematically illustrating a second terminal bus bar and a joint member friction stir welded at the front side bus bar frame of FIG. 15.

### [DESCRIPTION OF REFERENCE NUMERALS]

10: battery pack
11: case
100: battery module
101: module frame
103F, 103R: end plate
110F, 100R: bus bar frame
111: inner rib
112: outer rib
113: slit
114: partition rib
115: through-hole
116: mount rib
117: fixing pin
121: first electrode lead
122: second electrode lead
130: inner bus bar
140: first terminal bus bar
141: first bent part
150: second terminal bus bar
151: second bent part
152: extension
160: circuit board
161: fixing hole
163: circuit joint
170: wire
171: wire body
172: first wire joint
173: second wire joint
180, 181, 182: joint member
T: friction stir welding tool

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of' used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery module according to a first embodiment of the present invention will be described.

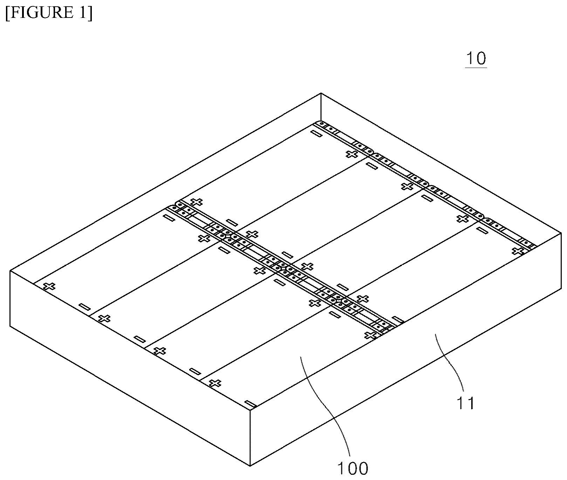

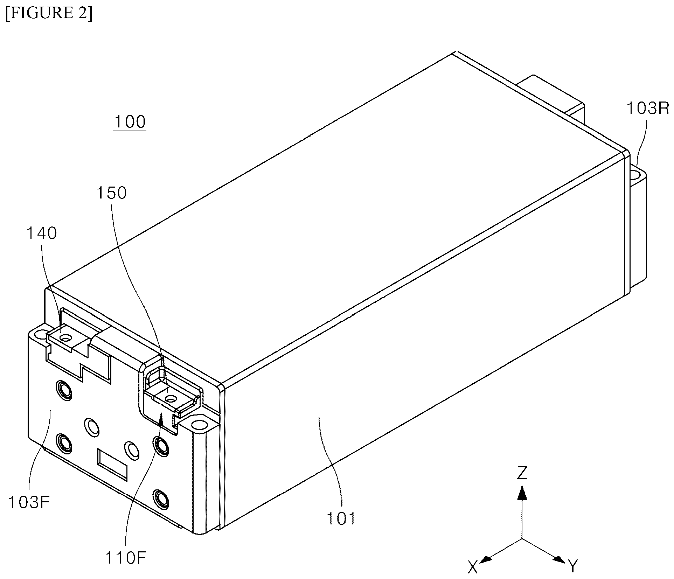

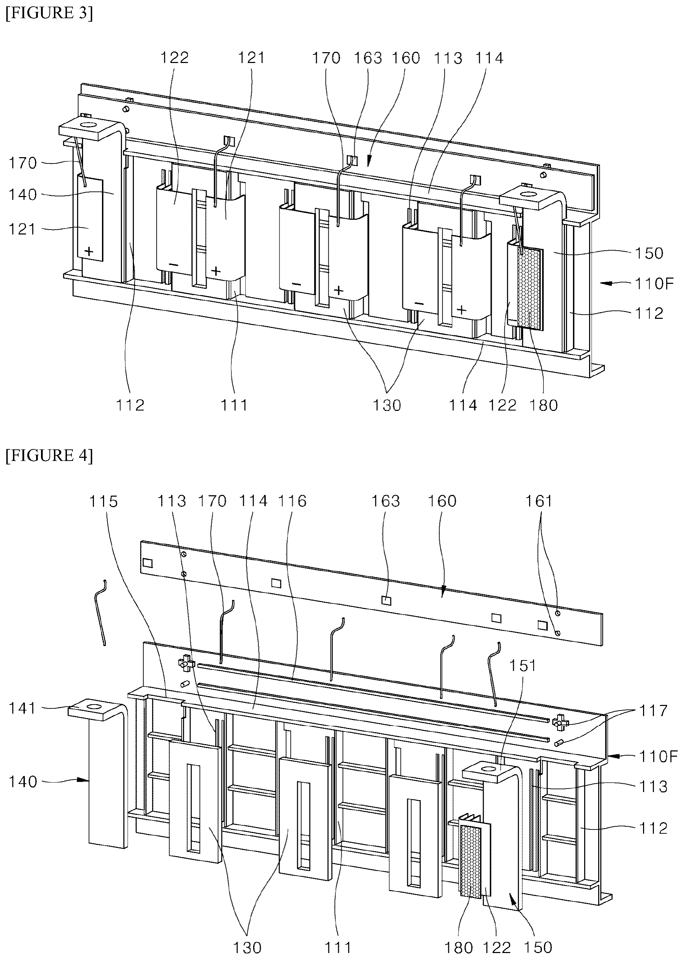

FIG. 1 is a perspective view schematically illustrating a battery pack according to the present invention, FIG. 2 is a perspective view schematically illustrating the battery module of FIG. 1, FIG. 3 is a perspective view schematically illustrating an inner bus bar, a first terminal bus bar, a second terminal bus bar and a wire installed at a front side bus bar frame of the battery module of FIG. 2, and FIG. 4 is an exploded perspective view schematically illustrating the inner bus bar, the first terminal bus bar and the second terminal bus bar installed at the front side bus bar frame of FIG. 3.

Referring to FIGS. 1 to 4, a battery module 100 according to a first embodiment of the present invention includes: an inner bus bar 130, a first terminal bus bar 140, a second terminal bus bar 150, a circuit board 160, a wire 170 and a joint member 180.

A plurality of wires 170 may be provided.

A plurality of inner bus bars 130 may be provided.

A plurality of battery modules 100 may be arranged inside the battery pack 10. The plurality of battery modules 100 may be arranged in a single row or multiple rows.

The battery module 100 includes a module frame 101 constituting the exterior thereof. A plurality of battery cells (not shown) are stacked inside the module frame 101. End plates 103F and 103R are arranged on the front and rear sides of the module frame 101, respectively. Bus bar frames 110F and 110R are arranged between the end plates 103F and 103R and the battery cells, respectively. The end plates 103F and 103R and the bus bar frames 110F and 110R may have an overall rectangular panel shape. Portions of the first terminal bus bar 140 and the second terminal bus bar 150 may be exposed at the peripheries of the front side bus bar frame 110F and the front side end plate 103F.

An inner rib 111 protrudes from each of the bus bar frames 110F and 110R to restrain the two widthwise ends of the inner bus bar 130. Two inner ribs 111 are installed for each inner bus bar 130. The inner rib 111 may have a straight shape. An outer rib 112 protrudes from each of the bus bar frames 110F and 110R to restrain two widthwise ends of each of the first terminal bus bar 140 and the second terminal bus bar 150. The inner rib 111 and the outer rib 112 may have various shapes as long as the inner bus bar 130 and the terminal bus bars 140 and 150 are restrained.

Each of the bus bar frames 110F and 110R is provided with slits 113 to allow electrode leads 121 and 122 connected to the battery cell (not shown) to pass through. The slits 113 are provided at two sides of the inner rib 111 and the first side of the outer rib 112. The slits 113 may be parallel to the inner rib 111 and the outer rib 112. The electrode leads 121 and 122 passing through the slits 113 at the two sides of the inner rib 111 are welded to the inner bus bar 130. The electrode leads 121 and 122 passing through the slits 113 at the first side of the outer rib 112 are welded to the first terminal bus bar 140 and the second terminal bus bar 150.

Partition ribs 114 are installed at each of the bus bar frames 110F and 110R to restrain two lengthwise ends of the inner bus bar 130 and terminal bus bars 140 and 150. A region where the inner bus bar 130 and the terminal bus bars 140 and 150 are installed and a region where the circuit board 160 is installed are partitioned by upper partition rib 114. The partition rib 114 may be arranged perpendicular to the inner rib 111 and the outer rib 112. The partition rib 114 may have a thin and long plate shape. A through-hole 115 is provided at the two lengthwise ends of the upper partition rib 114 at the front side bus bar frame 110F to allow the first terminal bus bar 140 and the second terminal bus bar 150 to pass through. The first terminal bus bar 140 and the second terminal bus bar 150 are installed so as to be exposed after passing through the through-hole 115. The upper partition rib 114 of the rear side bus bar frame 110R is not provided with the through-hole 115.

Each of the bus bar frames 110F and 110R is provided with a mount rib 116 to support the circuit board 160. At least two mount ribs 116 are provided in parallel to stably support the circuit board 160. The mount rib 116 is shorter than the circuit board 160.

Each of the bus bar frames 110F and 110R includes a plurality of fixing pins 117 protruding from two lengthwise ends of the mount ribs 116. Two or more fixing pins 117 may be installed at each of the two sides of the mount rib 116. The two lengthwise ends of the circuit board 160 are provided with fixing holes 161 where the fixing pins 117 are inserted.

The first electrode lead 121 and the second electrode lead 122 have opposite polarities. In addition, the first electrode lead 121 and the second electrode lead 122 are made of materials of different types. For example, the first electrode lead 121 may include aluminum or aluminum alloy, and the second electrode lead 122 may include copper or copper alloy.

The first electrode lead 121 and the second electrode lead 122 are connected to the inner bus bar 130 arranged at the bus bar frames 110F and 110R. The inner bus bar 130 is placed between the inner ribs 111. A long hole (not shown) is provided in the center of the inner bus bar 130 along the lengthwise direction of the inner bus bar 130. A first electrode lead 121 and a second electrode lead 122 are connected to each inner bus bar 130. A portion of or all of the inner bus bars 130 may include copper.

A first electrode lead 121 is connected to the first terminal bus bar 140 disposed at the front side bus bar frame 110F. The first terminal bus bar 140 is a part connected to an external terminal (not shown). The first terminal bus bar 140 is disposed at the two outermost sides of a plurality of inner bus bars 130. A vertically bent first bent part 141 is provided at the first side of the first terminal bus bar 140, and a first fastening hole (not shown) is provided at the first bent part 141 to be connected to an external terminal. A portion of or all of the first terminal bus bar 140 may include copper.

A second electrode lead 122 having a polarity opposite to the first electrode lead 121 is connected to the second terminal bus bar 150 disposed at the front side bus bar frame 110F. The second terminal bus bar 150 is connected to an external terminal (not shown) having a polarity opposite to the external terminal connected to the first terminal bus bar 140. The second terminal bus bar 150 is disposed at the outermost end of the plurality of inner bus bars 130. The second terminal bus bar 150 is disposed opposite to the first terminal bus bar 140. A vertically bent second bent part 151 is provided at the first side of the second terminal bus bar 150, and a second fastening hole (not shown) is provided at the second bent part 151 to be connected to the external terminal. A portion of or all of the second terminal bus bar 150 may include copper.

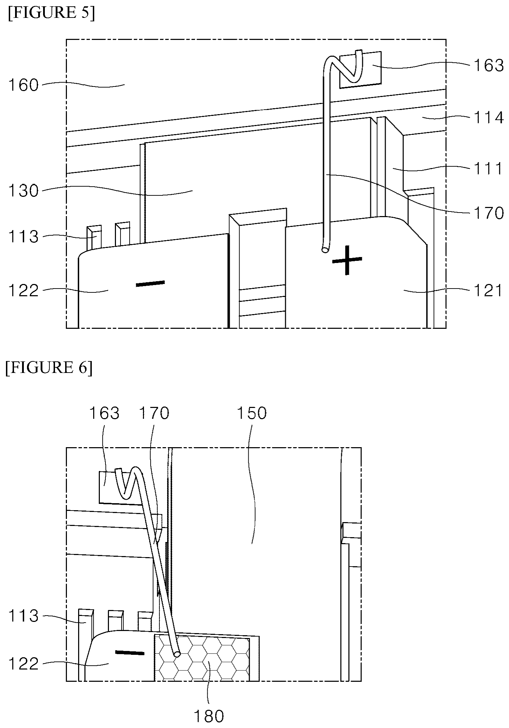

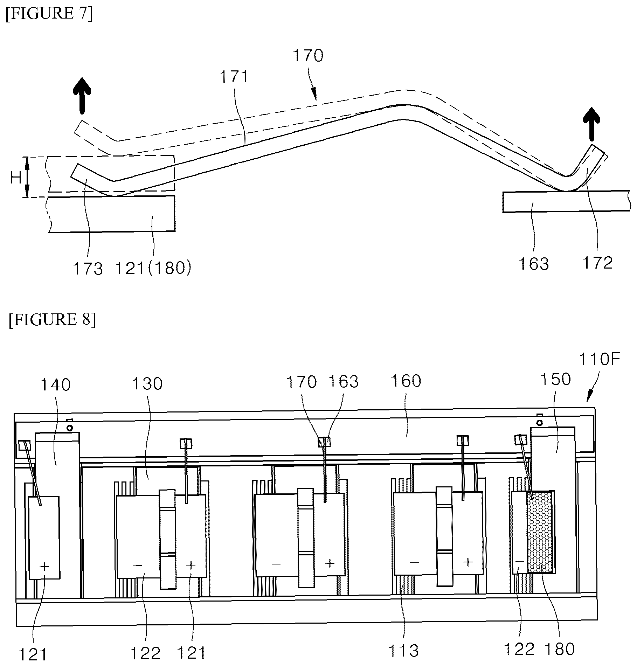

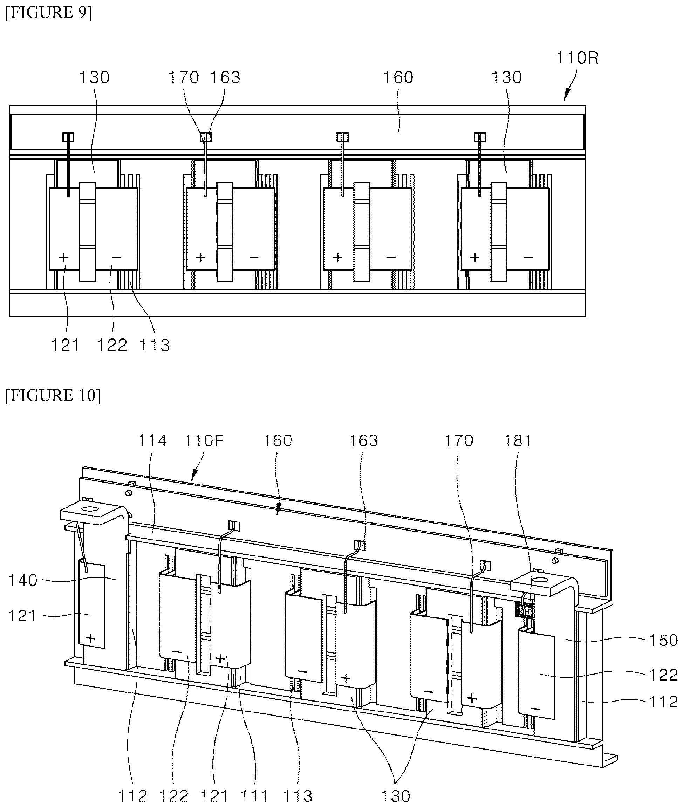

FIG. 5 is an enlarged view schematically illustrating a wire soldered to a first electrode lead of the inner bus bar and a circuit board at the front side bus bar frame of FIG. 3, FIG. 6 is an enlarged view schematically illustrating a wire soldered to a joint member of the second terminal bus bar and the circuit board in the front side bus bar frame of FIG. 3, FIG. 7 is a side view schematically illustrating a soldering of a wire facilitated despite a height difference of the wire at the front side bus bar frame of FIG. 3, FIG. 8 is a plan view schematically illustrating the inner bus bar, the first terminal bus bar and the second terminal bus bar installed at the front side bus bar frame of FIG. 3, and FIG. 9 is a plan view schematically illustrating an inner bus bar and a wire installed at a rear side bus bar frame of FIG. 2.

Referring to FIGS. 5 to 9, the inner bus bar 130, a first terminal bus bar 140 and a second terminal bus bar 150 are installed in the front side bus bar frame 110F. An inner bus bar 130 is installed in the rear side bus bar frame 110R. However, the first terminal bus bar and the second terminal bus bar are not installed. The plurality of inner bus bars 130, the first terminal bus bar 140 and the second terminal bus bar 150 installed in the front side bus bar frame 110F are connected in series to the plurality of inner bus bars 130 installed in the rear side bus bar frame 110R. Accordingly, battery cells built into the battery module 100 are connected in series.

A plurality of circuit joints 163 are provided in the circuit board 160. The circuit boards 160 are installed at the front and rear side bus bar frames 110F and 110R, respectively. A flexible circuit board (FPCB) may be employed as the circuit board 160. The number of circuit joints 163 is the same as the total number of the inner bus bar 130, the first terminal bus bar 140 and the second terminal bus bar 150. The plurality of circuit joints 163 may be arranged in a row along the lengthwise direction of the circuit board 160.

The joint member 180 may be connected to the second terminal bus bar 150.

The joint member 180 may have a plate shape.

A wire 170 is soldered to the joint member 180 connected to the second terminal bus bar 150. The area of the joint member 180 is significantly larger than the diameter of the wire 170. Accordingly, even when a soldering defect occurs when soldering the wire 170 to the circuit joint 163 of the circuit board 160 and the joint member 180, the wire 170 may be re-soldered to the unsoldered portion of the joint member 180.

Soldering uses solder paste to bond base materials without melting the base material or by locally melting the base material. In addition, since the wire 170 has a small diameter, the soldering area may be significantly small when soldered to the base material. Accordingly, the bonding strength of the soldered portion may be tested by pulling the wire 170 with a tension clamp (not shown) during the soldering process. In addition, non-destructive inspection may be performed without cutting the soldered portion, and real-time full monitoring of the soldered portion during the soldering process may be performed.

In comparison, welding heats and melts similar or different parent materials by highly concentrated thermal energy or high-temperature heat. Laser welding, ultrasonic welding, resistance welding, etc. may be applied to such welding. Here, the portion to be welded is bonded while rearranging the atomic bonds of different parent materials, and may be chemically or thermally modified differently. In addition, welding significantly increases the welding area (welding bead) compared to soldering.

The plurality of wires 170 are soldered to the corresponding first electrode lead 121, the corresponding circuit joint 163, and the joint member 180, respectively. The diameter of the wire 170 has a significantly smaller cross-section than the circuit joint 163. When the wire 170 is soldered to the first electrode lead 121 and the circuit joint 163, the area of the soldered portion becomes significantly smaller than the area of the unsoldered portion of the first electrode lead 121 and the circuit joint 163. Accordingly, when a soldering defect occurs on the first end of the wire 170, the first end of the wire 170 may be re-soldered to the unsoldered portion of the first electrode lead 121 and the circuit joint 163.

In addition, since a plurality of wires 170 are soldered without melting to the first electrode lead 121, the circuit joint 163 of the circuit board 160 and the joint member 180 by the solder paste, it is not necessary that a separate sensing plate be installed to weld the circuit board 160 to the inner bus bar 130 or the first electrode lead 121. Accordingly, the welding process for connecting the sensing plate to the circuit board 160 may be omitted. In addition, since it is not necessary that the sensing plate be used, the number of parts may be reduced and the assembly time of the battery module 100 may be shortened.

In addition, even when the flexible circuit board 160 is applied, the clamping work for fixing the positions of the flexible circuit board 160 and the sensing plate using a clamping device does not need to be performed. Since the clamping work performed directly by the worker may be omitted, the soldering process of the circuit board 160 and the wire 170 may be automated.

In addition, the wire 170 is soldered at a significantly lower temperature than laser welding. Accordingly, when the first electrode lead 121, the circuit joint 163 of the circuit board 160 and the joint member 180 are soldered, chemical or thermal deformation hardly occurs. Therefore, the wire 170 with a soldering defect may be re-soldered to the first electrode lead 121, the circuit joint 163 of the circuit board 160 and the joint member 180.

In addition, since the wire 170 is soldered to the first electrode lead 121, the circuit joint 163 of the circuit board 160 and the joint member 180 by the solder paste, the first electrode lead 121, the circuit joint 163 of the circuit board 160 and the joint member 180 are not melted or locally and minutely melted.

In addition, after soldering the wire 170, the tension clamp may pull the wire 170 to test the bonding strength of the soldered portion. Accordingly, the bonding strength of the soldered portion may be evaluated through a non-destructive test. In addition, since the bonding strength evaluation of the wire 170 may be performed together with the soldering process of the wire 170, the time required for the strength evaluation of the soldered portion may be significantly reduced. In addition, when a soldering defect of the wire 170 occurs, the wire 170 may be quickly re-soldered.

The wire 170 includes: a wire body 171; a first wire joint 172; and a second wire joint 173.

The wire body 171 may have a shape bent toward the circuit joint 163 and the inner bus bar 130. Here, the wire body 171 may be inclined on two sides with respect to the center thereof.

The first wire joint 172 may be bent at the first end of the wire body 171 and may be soldered to the circuit joint 163.

The second wire joint 173 is bent at the second end of the wire body 171 and may be soldered to the first electrode lead 121 or the joint member 180.

Since the wire body 171 has a bent shape and the first wire joint 172 and the second wire joint 173 are bent, the wire 170 may be easily soldered despite the height difference (H: see FIG. 7) between the circuit joint 163 and the inner bus bar 130 and the joint member 180.

In addition, the first wire joint 172 may be convex toward the circuit joint 163. Accordingly, even when the height of the wire body 171 is changed, the first wire joint 172 may stably maintain contact with the circuit joint 163, and the change in the contact area of the first wire joint 172 may be prevented.

The second wire joint 173 may be convex toward the first electrode lead 121 or the joint member 180. For example, the first wire joint 172 and the second wire joint 173 may be round. Even when the height or inclination angle of the wire body 171 is different, the second wire joint 173 may stably maintain contact with the first electrode lead 121 or the joint member 180, and the changes in the contact area and soldering area of the second wire joint 173 may be prevented.

After the soldering process in the production line, the ends of the wire joints 172 and 173 may be immediately clamped and tensioned for bonding strength inspection. For example, the tension direction may correspond to the direction of the arrows shown in FIG. 7. However, the tension direction is not necessarily limited thereto. Accordingly, comprehensive inspection of the soldering area is possible without time consumption.

Meanwhile, the battery module 100 described above includes an interconnect board (ICB) constituted by a plurality of inner bus bars 130, a first terminal bus bar 140 and a second terminal bus bar 150 connecting battery cells in series. In order for the battery cells to be connected in series, first electrode leads 121 and second electrode leads 122 of different polarities are connected to the inner bus bar 130. In addition, only the first electrode lead 121 is connected to the first terminal bus bar 140, and only the second electrode lead 122 of the opposite polarity to the first electrode lead 121 is connected to the second terminal bus bar 150.

The circuit joint 163 may include a material of the same type as one of the first electrode lead 121 and the second electrode lead 122. For example, the circuit joint 163 may include aluminum of the same type as the first electrode lead 121. Since the circuit joint 163 and the first electrode lead 121 include a material of the same type, the soldering strength of the wire 170 may be sufficiently secured. Here, the material of the same type basically includes all materials that have the same alloy composition and alloy ratio, or are different within a certain range.

The first electrode lead 121 may include a material of the same type as the wire 170. Since the first electrode lead 121 and the wire 170 include a material of the same type, sufficient bonding strength may be secured when soldering the first electrode lead 121 and the wire 170. In addition, since the first electrode lead 121 and the second electrode lead 122 are connected together to the inner bus bar 130, the wire 170 and the first electrode lead 121 may be soldered to the inner bus bar 130.

The second electrode lead 122 may include a material of the same type as the inner bus bar 130. Accordingly, the second electrode lead 122 and the inner bus bar 130 may be welded by such as laser welding.

The joint member 180 may include a material of the same type as the wire 170. For example, the joint member 180 and the wire 170 may include aluminum. Accordingly, the bonding strength of the joint member 180 and the wire 170 may be sufficiently secured.

In contrast, since the interconnect board connects the battery cells in series, the first terminal bus bar 140 is connected to the wire 170 and the first electrode lead 121 of the same type of material whereas the second terminal bus bar 150 is connected to the wire 170 and the second electrode lead 122 of different types of materials. Since the second electrode lead 122 includes different type of material from the wire 170, it may be difficult to sufficiently secure the bonding strength during soldering. Accordingly, in the present invention, the joint member 180 of the same type of material as the wire 170 is connected to the second terminal bus bar 150, and the wire 170 is soldered to the joint member 180 to increase the bonding strength of the wire 170.

Meanwhile, the inner bus bar 130, the first electrode lead 121 and the second electrode lead 122 may be bonded by melting with a laser. Accordingly, even when the inner bus bar 130, the first electrode lead 121 and the second electrode lead 122 include different materials, sufficient bonding strength may be secured.

The joint member 180 is stacked on and bonded to the second terminal bus bar 150 by melting with a laser. Although the joint member 180 and the second terminal bus bar 150 are of materials of different types, sufficient bonding strength may be secured by laser welding.

In addition, the joint member 180 may have a plate shape. The joint member 180 may have a square plate shape that is slightly narrower than the width of the second electrode lead 122. Accordingly, the second electrode lead 122 and the wire 170 are of materials of different types so as to be welded by a laser, etc., and the wire 170 and the joint member 180 are of materials of the same type so as to be soldered. Accordingly, the soldering strength of the wire 170 may be sufficiently secured.

Hereinafter, a battery module according to a second embodiment of the present invention will be described. The second embodiment is substantially the same as the first embodiment described above, except for the shape of the second terminal bus bar and the joint member such that the same reference numerals are given to the same elements and the descriptions thereof are omitted.

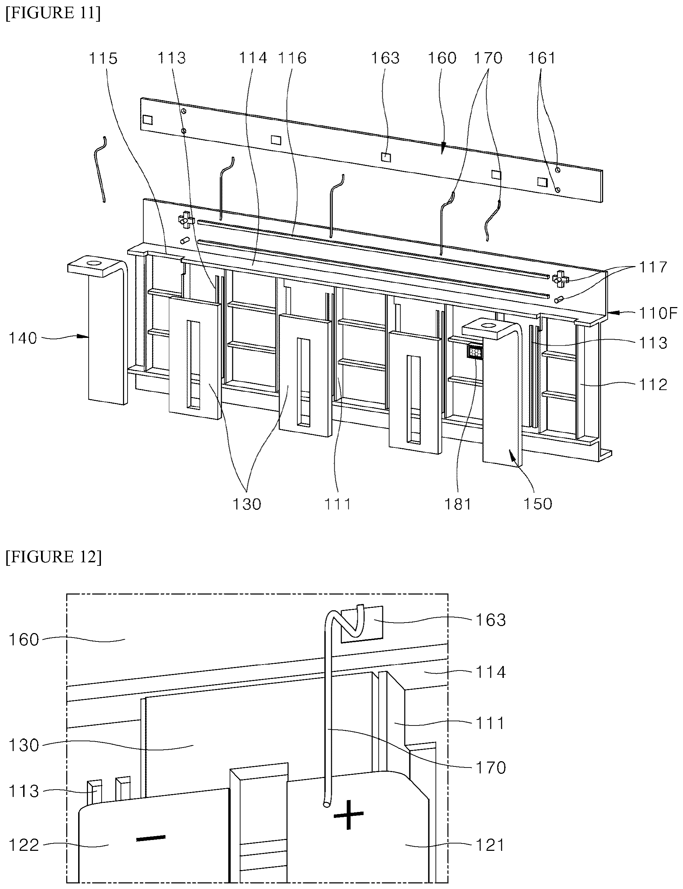

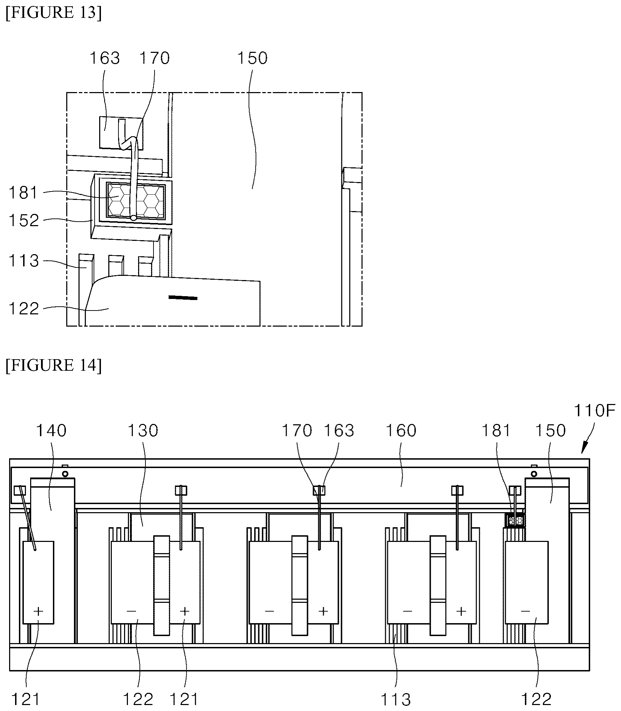

FIG. 10 is a perspective view schematically illustrating an inner bus bar, a first terminal bus bar, a second terminal bus bar and a wire installed at a front side bus bar frame of a battery module according to a second embodiment of the present invention, FIG. 11 is an exploded perspective view schematically illustrating the inner bus bar, the first terminal bus bar, the second terminal bus bar and the wire installed at the front side bus bar frame of FIG. 10, FIG. 12 is an enlarged view schematically illustrating a wire soldered to a first electrode lead of the inner bus bar and a circuit board at the front side bus bar frame of FIG. 10, FIG. 13 is an enlarged view schematically illustrating a wire soldered to a joint member of the second terminal bus bar and the circuit board in the front side bus bar frame of FIG. 10, and FIG. 14 is a plan view schematically illustrating the inner bus bar, the first terminal bus bar and the second terminal bus bar installed at the front side bus bar frame of FIG. 10.

Referring to FIGS. 10 to 14, the second terminal bus bar 150 of the battery module 100 according to the second embodiment of the present invention includes an extension 152 extending from the side surface thereof, and a joint member 181 is bonded to the extension 152.

The extension 152 is made of a material of the same type as the second terminal bus bar 150. In addition, when manufacturing the second terminal bus bar 150, the extension 152 may be formed integrally with the second terminal bus bar 150. In addition, the second terminal bus bar 150 and the extension 152 may be manufactured separately and then welded by laser welding, etc.

The joint member 181 and the extension 152 may be bonded by melting with a laser. Here, the extension 152 may include a material of the same type as the second terminal bus bar 150, and the joint member 181 may include a material of the same type as the wire 170. Accordingly, the extension 152 and the joint member 181 of materials of different types may be bonded by laser welding, and the wire 170 and the joint member 181 of a material of the same type may be bonded by soldering. Furthermore, since the sensing plate is not connected to the circuit board 160, it is not necessary that the circuit board 160 and the sensing plate be clamped such that the wire 170 and the joint member 181 may be soldered by an automated process.

The joint member 181 may have a plate shape. Here, the joint member 181 may be of the same size as or slightly smaller than the extension 152.

The elements installed at the rear side bus bar frame in the second embodiment are substantially the same as those installed at the rear side bus bar frame in the first embodiment. Thus, such elements are not shown.

Next, a battery module according to a third embodiment of the present invention will be described. The third embodiment is substantially the same as the first embodiment described above except for the shapes of the second terminal bus bar and the joint member such that the same reference numerals are given to the same elements and the descriptions thereof are omitted.

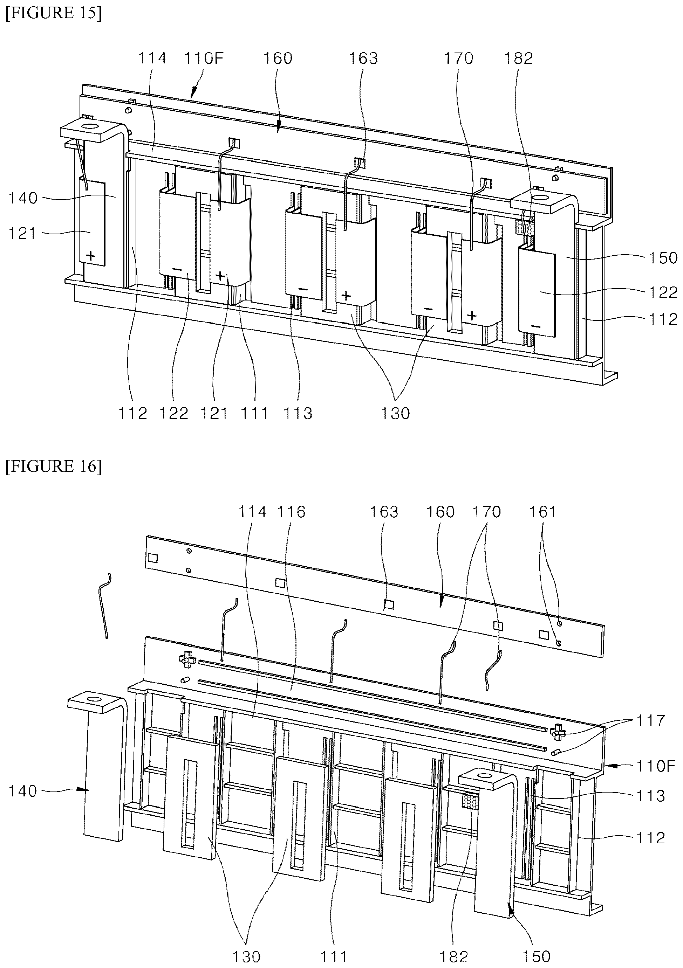

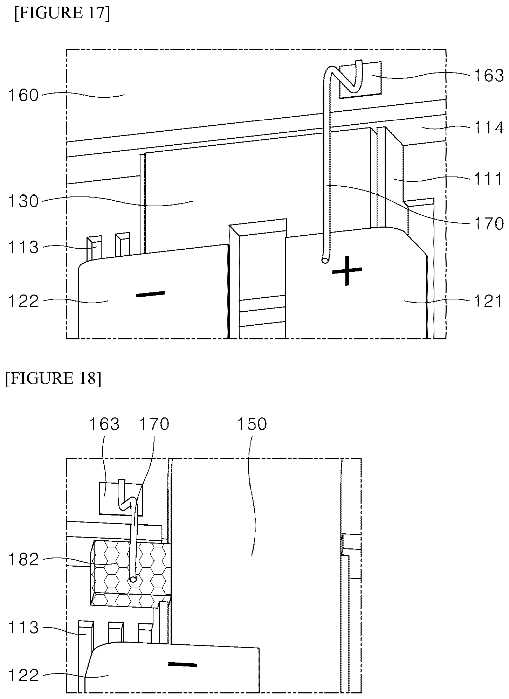

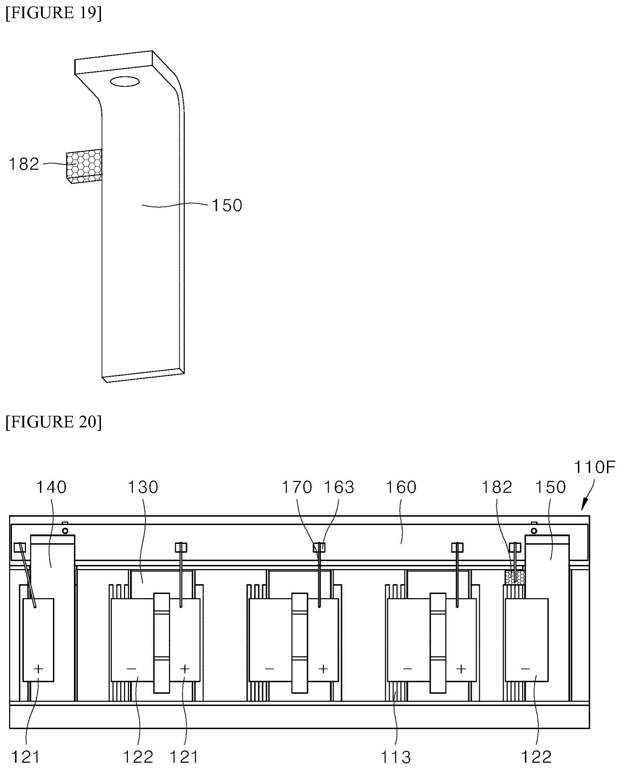

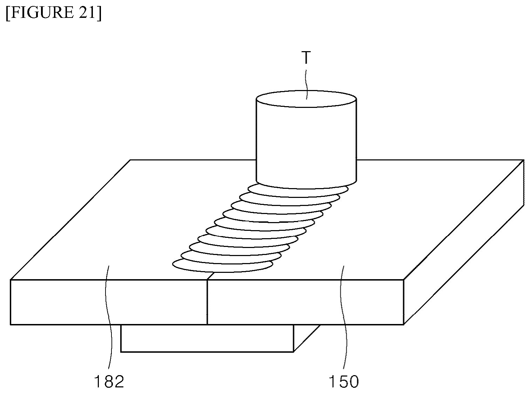

FIG. 15 is a perspective view schematically illustrating an inner bus bar, a first terminal bus bar, a second terminal bus bar and a wire installed at a front side bus bar frame of a battery module according to a third embodiment of the present invention, FIG. 16 is an exploded perspective view schematically illustrating the inner bus bar, the first terminal bus bar, the second terminal bus bar and the wire installed at the front side bus bar frame of FIG. 15, FIG. 17 is an enlarged view schematically illustrating a wire soldered to a first electrode lead of the inner bus bar and a circuit board at the front side bus bar frame of FIG. 15, FIG. 18 is an enlarged view schematically illustrating a wire soldered to a joint member of the second terminal bus bar and the circuit board in the front side bus bar frame of FIG. 15, FIG. 19 is a perspective view schematically illustrating a structure of the second terminal bus bar and the joint member at the front side bus bar frame of FIG. 15, FIG. 20 is a plan view schematically illustrating the inner bus bar, the first terminal bus bar and the second terminal bus bar installed at the front side bus bar frame of FIG. 15, and FIG. 21 is a perspective view schematically illustrating a second terminal bus bar and a joint member friction stir welded at the front side bus bar frame of FIG. 15.

Referring to FIGS. 15 to 21, in a battery module 100 according to the third embodiment of the present invention, a joint member 182 may include a material of a same type as a wire 170, and may be welded to a side surface of a second terminal bus bar 150. The joint member 182 may be an aluminum pad or an aluminum bar, and the wire 170 may be an aluminum wire. In addition, the second terminal bus bar 150 may be made of copper.

The joint member 182 and the second terminal bus bar 150 may be welded by friction stir welding. A friction stir welding tool T is provided with a screw-shaped protrusion (probe) on the lower surface. Friction stir welding tool T is rotated at high speed and inserts protrusion into objects 150 and 182 to be bonded, and friction heat is generated by friction between friction stir welding tool T and objects 150 and 182 to be bonded. The friction heat softens the area around friction stir welding tool T, and the softened area is forcibly mixed by plastic flow and welded.

The joint member 182 and second terminal bus bar 150 may be welded by laser welding, apparently.

The elements installed at the rear side bus bar frame in the third embodiment are substantially the same as those installed at the rear side bus bar frame in the first embodiment. Thus, such elements are not shown.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a bus bar frame;
an inner bus bar disposed in the bus bar frame and connected to at least one of a first electrode lead and a second electrode lead having opposite polarities;
a first terminal bus bar disposed in the bus bar frame and connected to a first electrode lead;
a second terminal bus bar disposed in the bus bar frame and connected to a second electrode lead;
a circuit board provided with a circuit joint;
a joint member bonded to the second terminal bus bar; and
a wire soldered to the first electrode lead and the circuit joint, or soldered to the circuit joint and the joint member.

2. The battery module of claim 1, wherein the joint member includes a material of a same type as the wire.

3. The battery module of claim 2, wherein the joint member and the wire include aluminum.

4. The battery module of claim 2 or 3, wherein the joint member and the wire are bonded by melting a solder paste.

5. The battery module of claim 2 or 3, wherein the wire includes a material of a same type as the first electrode lead.

6. The battery module of any one of claims 1 to 3, wherein the first electrode lead and the second electrode lead include materials of different types.

7. The battery module of claim 6, wherein the second electrode lead includes a material of a same type as the inner bus bar.

8. The battery module of claim 1, wherein the first electrode lead and the inner bus bar, or the second electrode lead and the inner bus bar are welded by laser.

9. The battery module of claim 1, wherein the joint member is stacked on and bonded to the second terminal bus bar.

10. The battery module of claim 1, wherein the second terminal bus bar includes an extension extending laterally from a body of the second terminal bus bar, and the joint member is bonded to the extension.

11. The battery module of claim 10, wherein the extension includes a material of a same type as the body of the second terminal bus bar.

12. The battery module of claim 1, wherein the joint member is bonded to a side surface of the second terminal bus bar.

13. The battery module of any one of claims 1 and 9 to 12, wherein the joint member and the second terminal bus bar are welded.

14. The battery module of claim 13, wherein the joint member has a plate shape, and the joint member is welded by laser to the second terminal bus bar.

15. The battery module of claim 13, wherein the joint member and the second terminal bus bar are friction stir welded.

16. The battery module of any one of claims 1 to 3, wherein the wire includes:
a wire body having a shape bent toward the circuit joint and the inner bus bar;
a first wire joint bent at a first end of the wire body and soldered to the circuit joint; and
a second wire joint bent at a second end of the wire body and soldered to the first electrode lead or the joint member.

17. The battery module of claim 16, wherein the first wire joint is convex toward the circuit joint, and the second wire joint is convex toward the first electrode lead or the joint member.

18. The battery module of claim 17, wherein the first wire joint and the second wire joint are round.
